# EUROPÄISCHE PATENTSCHRIFT

(11) **EP 2 407 698 B1**
(45) Veröffentlichungstag und Bekanntmachung des Hinweises auf die Patenterteilung: **17.05.2017**
(21) Anmeldenummer: 11172354.0
(22) Anmeldetag: 01.07.2011
(51) Int. Cl.: F16L 37/098, F16L 57/06, F02M 35/10, F02M 25/06, F01M 13/02

(54) **Kupplungseinrichtung, Kurbelgehäuseentlüfungseinrichtung und Frischluftanlage**
Coupling device, crankcase ventilation device and fresh air system
Dispositif de couplage, dispositif d'aération du carter de vilebrequin et installation d'air frais

(30) Priorität: 13.07.2010 DE 102010031288
(43) Veröffentlichungstag der Anmeldung: 18.01.2012
(73) Patentinhaber: MAHLE International GmbH, 70376 Stuttgart (DE)
(72) Erfinder: Adrian, Helge, 70182 Stuttgart (DE); Potscher, Sjard, 70499 Stuttgart (DE)
(74) Vertreter: BRP Renaud & Partner mbB Rechtsanwälte Patentanwälte Steuerberater

(56) Entgegenhaltungen:
- EP-A1- 0 924 453
- EP-A1- 2 019 079
- EP-A2- 1 674 679
- EP-A2- 1 726 865
- WO-A1-2008/136761
- DE-A1- 3 825 866
- DE-A1-102004 052 475
- GB-A- 2 141 509
- US-A- 4 098 528

## Beschreibung

Die vorliegende Erfindung betrifft eine Kupplungseinrichtung zum Verbinden einer ersten Fluidleitung mit einer zweiten Fluidleitung, mit den Merkmalen des Oberbegriffs des Anspruchs 1. Die Erfindung betrifft außerdem eine mit einer derartigen Kupplungseinrichtung ausgestattete Kurbelgehäuseentlüftungseinrichtung für eine Brennkraftmaschine sowie eine mit einer derartigen Kupplungseinrichtung ausgestattete Frischluftanlage für eine Brennkraftmaschine.

Bei einer Frischluftanlage einer Brennkraftmaschine und bei einer Kurbelgehäuseentlüftungseinrichtung einer Brennkraftmaschine müssen im Rahmen der Montage Fluidleitungen miteinander oder mit Komponenten der jeweiligen Einrichtung oder Anlage verbunden werden. Beispielsweise kann eine Blow-by-Gas-Leitung der Kurbelgehäuseentlüftungseinrichtung mit einem Kurbelgehäuse der Brennkraftmaschine oder mit einer Luftleitung der Frischluftanlage oder mit einem Ölabscheider der Kurbelgehäuseentlüftungseinrichtung fluidisch verbunden werden. Ferner kann eine Luftleitung der Frischluftanlage mit einem Filter der Frischluftanlage oder mit einer Ladeeinrichtung der Frischluftanlage oder mit einem Verteiler der Frischluftanlage fluidisch verbunden werden. Um derartige fluidische Verbindungen möglichst einfach, insbesondere blind, herzustellen, können Kupplungseinrichtung der eingangs genannten Art verwendet werden.

Eine einfache Kupplungseinrichtung ist beispielsweise aus der WO 2009/124805 A1 bekannt. Sie umfasst einen ersten Stutzen, der an seiner Außenseite eine Außenrastkontur aufweist und der mit einer ersten Fluidleitung verbunden ist oder damit verbindbar ist. Ferner ist ein zweiter Stutzen vorgesehen, der an seiner Außenseite eine Außenrastkontur aufweist und der mit einer zweiten Fluidleitung verbunden ist oder damit verbindbar ist. Schließlich umfasst die Kupplungseinrichtung außerdem eine Hülse, in welche beide Stutzen an gegenüberliegenden Enden einsteckbar sind und die an ihrer Innenseite zwei zu den Außenrastkonturen der Stutzen komplementäre Innenrastkonturen aufweist. Beim Einstecken der Stutzen in die Hülse verrasten die Innenrastkonturen mit den Außenrastkonturen, wodurch der jeweilige Stutzen in der Hülse gegen axiales Herausziehen gesichert ist.

Bei der bekannten Kupplungseinrichtung wird die jeweilige Innenrastkontur mit Hilfe eines ringförmigen Sicherungselements realisiert, das in eine an der Innenseite der Hülse ausgebildete Innennut eingesetzt ist und radial federnde Rastelemente aufweist.

Weitere derartige Kupplungseinrichtungen sind aus der EP 1 912 009 A1, aus der EP 0 924 453 A1 und aus der EP 1 835 220 A1 bekannt.

Eine gattungsgemäße Kupplungseinrichtung ist beispielsweise aus der EP 1 726 865 A2 und aus der DE 38 25 866 A1 bekannt. Sie unterscheidet sich von einer einfachen Kupplungseinrichtung der vorstehend beschriebenen Art dadurch, dass die Hülse von einer Schutzhülle umhüllt ist. Hierdurch erhält die Kupplungseinrichtung eine erhöhte Dauerhaltbarkeit, was die Möglichkeiten ihrer Verwendung in einem Fahrzeug verbessert.

Die vorliegende Erfindung beschäftigt sich mit dem Problem, für eine Kupplungseinrichtung der eingangs genannten Art bzw. für eine damit ausgestattete Kurbelgehäuseentlüftungseinrichtung bzw. für eine damit ausgestattete Frischluftanlage eine verbesserte Ausführungsform anzugeben, die sich insbesondere durch die erhöhte Funktionssicherheit und/oder durch geringe Herstellungskosten auszeichnet.

Erfindungsgemäß wird dieses Problem durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, die Hülse mit einer Schutzhülle zu umhüllen. Die Verwendung einer derartigen Schutzhülle bietet einen Schutz vor Verunreinigungen und Beschädigungen und erhöht somit die Funktionssicherheit und Zuverlässigkeit der Kupplungseinrichtung. Beispielsweise kann sich ein mit einer derartigen Kupplungseinrichtung ausgestattetes Bauteil bei einer Fahrzeuganwendung relativ zu anderen Bauteilen bewegen, so dass es insbesondere auch zu Kontakten kommen kann, die auf Dauer zu einer Beschädigung der Hülse führen könnten. Durch die Ausstattung der Hülse mit einer derartigen Schutzhülle lässt sich die Gefahr derartiger Beschädigungen der Hülse reduzieren.

Erfindungsgemäß ist außerdem vorgesehen, dass die Verrastung zwischen den Stutzen und der Hülse so gestaltet ist, dass sie nicht ohne Zerstörung der Hülse und/oder wenigstens eines Stutzens lösbar ist. Insoweit handelt es sich hier um eine Kupplungseinrichtung zum Herstellen einer unlösbaren Verbindung. Durch diese Bauweise kann zum einen die Gefahr von Manipulationen reduziert werden. Zum anderen kann auch die Gefahr, dass sich die Verrastung selbsttätig löst, reduziert werden.

Um die Verrastung insoweit unlösbar auszugestalten, kann beispielsweise vorgesehen sein, die miteinander zusammenwirkenden Rastkonturen in Axialrichtung der Hülse vergleichsweise weit im Inneren anzuordnen um eine Zugänglichkeit von außen mittels eines Werkzeugs zu erschweren. Ferner lassen sich auch die Materialien von Hülsen und Stutzen so aufeinander abstimmen, dass eine elastische Verformung, die zu einem Lösen der Verrastung führt, nicht möglich ist.

Erfindungsgemäß ist zusätzlich vorgesehen, dass die Hülse zumindest eine Sollbruchstelle aufweist, die zum Lösen der Verbindung eine gezielte Zerstörung der Hülse ermöglicht. Mit Hilfe dieser Sollbruchstelle wird eine Möglichkeit geschaffen, die verrastete Verbindung so zu lösen, dass dabei nur die Hülse zerstört wird, so dass insbesondere eine Beschädigung der Stutzen vermieden werden kann. Da die Stutzen in der Regel fest an einem anderen Bauteil, nämlich an der jeweiligen Fluidleitung, angebracht sind bzw. angeordnet sind, lässt sich die Hülse sehr viel einfacher ersetzen als ein Stutzen.

Zur Realisierung der Sollbruchstelle kann an der Außenseite der Hülse zumindest eine Axialnut ausgebildet sein. An dieser Axialnut kann beispielsweise ein geeignetes Werkzeug, insbesondere ein Schlitzschraubendreher, angesetzt werden, um die Hülse dort zu zerstören.

Insbesondere in Verbindung mit einer an der Hülse von außen zugänglichen Sollbruchstelle ist die Anbringung der Schutzhülle von besonderem Vorteil. Die Schutzhülle kann insbesondere so gestaltet sein, dass sie die Sollbruchstelle verdeckt bzw. abdeckt, so dass ein Zugriff zur Sollbruchstelle erschwert bzw. behindert ist. Darüber hinaus kann die Schutzhülle opak, also lichtundurchlässig gestaltet sein, so dass eine außen an der Hülse gegebenenfalls sichtbare Sollbruchstelle nicht mehr erkennbar ist.

Besonders vorteilhaft ist daher eine Ausführungsform, bei welcher die Schutzhülle eine an der Außenseite der Hülse angeordnete Betätigungsstelle einer Sollbruchstelle kaschiert, wobei die Stollbruchstelle bei ihrer Betätigung eine gezielte Zerstörung der Hülse zum Lösen der Verrastung zwischen den Stutzen und der Hülse ermöglicht. Hierdurch bleibt die Betätigungsstelle bzw. die Sollbruchstelle unsichtbar, was einen Missbrauch zum Lösen der Verrastung erschwert.

Bei einer Sollbruchstelle, die durch eine außenliegende Längsnut gebildet ist, dient die Längsnut selbst als Betätigungsstelle, nämlich als Eingriffsmöglichkeit für ein geeignetes Werkzeug, wie z.B. einen Schlitzschraubendreher. Alternativ kann die Betätigungsstelle beispielsweise auch durch eine langlochförmige Vertiefung oder Durchgangsöffnung gebildet sein, in die ein entsprechendes Werkzeug, wie z.B. ein Schlitzschraubendreher, eingreifen kann und die beispielsweise im Bereich einer innenliegenden Längsnut an der Hülse angeordnet ist. Auch kann die Hülse beispielsweise aus zwei Halbschalen bestehen, die in einer Trennebene miteinander verbunden, insbesondere verklebt, sind. Die Vertiefung oder die Durchgangsöffnung oder eine beliebige andere geeignete Betätigungsstelle oder Eingriffstelle kann dann gezielt im Bereich dieser Verbindung bzw. Verklebung angeordnet sein.

Bei einer Weiterbildung kann die Schutzhülle als Beschichtung ausgestaltet sein, die auf die Hülse aufgebracht ist. Alternativ kann die Schutzhülle ein auf die Hülse aufgebrachtes zusätzliches Bauteil sein. Beispielsweise kann dieses Schutzhüllenbauteil auf die Hülse aufgeschoben, aufgeschrumpft, aufgewickelt oder in sonstiger Weise aufgebracht sein. Ferner kann dieses Schutzhüllenbauteil lose an der Hülse angeordnet oder mit der Hülse fest verbunden sein, beispielsweise mittels einer Verklebung, Vulkanisierung oder Plastifizierung.

Entsprechend einer anderen Ausführungsform kann vorgesehen sein, die Innen-rastkonturen an der Hülse integral auszuformen. Hierdurch kann auf ein separates Sicherungselement zur Realisierung der Innenrastkonturen verzichtet werden. Somit entfällt die Herstellung zusätzlicher Bauteile sowie die Montage dieser zusätzlichen Bauteile. Insgesamt kann somit die Kupplungseinrichtung vergleichweise preiswert realisiert werden.

Zweckmäßig sind auch die Außenrastkonturen an den Stutzen integral ausgeformt. Für die sichere Verrastung der Kupplungseinrichtung sind somit insgesamt nur drei Bauteile erforderlich, nämlich die beiden Stutzen und die Hülse. Es ist klar, dass zusätzlich auch wenigstens ein Dichtungselement vorhanden sein kann, um mit Hilfe der Kupplungseinrichtung die beiden Fluidleitungen dicht miteinander zu verbinden.

Gemäß einer besonders vorteilhaften Ausführungsform kann die jeweilige Innenrastkontur durch zumindest zwei in Umfangsrichtung verteilt angeordnete Rastkontursegmente gebildet sein. Mit anderen Worten, die jeweilige Innenrastkontur ist in Umfangsrichtung nicht vollständig umlaufend realisiert, sondern segmentweise. Hierdurch vereinfacht sich die Verrastung beim Steckvorgang.

Besonders vorteilhaft ist eine weitergehende Ausführungsform, bei welcher die Rastkontursegmente der einen Innenrastkontur gegenüber den Rastkontursegmenten der anderen Innenrastkontur in Umfangsrichtung versetzt angeordnet sind. Hierdurch können sich insbesondere fertigungstechnische Vorteile ergeben. Beispielsweise kann ein Spritzformwerkzeug zum Herstellen der Hülsen so einfacher realisiert werden, da weniger Hinterschnittkonturen vorhanden sind.

Gemäß einer anderen weiterführenden Ausgestaltung kann die jeweilige Innenrastkontur genau zwei Rastkontursegmente aufweisen, die gegenüber den beiden Rastkontursegmenten der jeweils anderen Innenrastkontur in Umfangsrichtung um 90° zueinander versetzt angeordnet sind. Auch hierdurch ergibt sich eine Vereinfachung für die Realisierung eines geeigneten Spritzformwerkzeugs.

Entsprechend einer weiteren Ausführungsform kann zumindest einer der Stutzen an seiner Außenseite einen ringförmig umlaufenden, abstehenden Bund aufweisen, der als Axialanschlag oder als Radialabstützung für die Hülse dient. Durch diesen Bund wird zum einen eine Positionierung und Stabilisierung der Hülse relativ zum jeweiligen Stutzen realisiert. Zum anderen erschwert dieser Bund die Zugänglichkeit zu den Rastkonturen.

Gemäß einer anderen vorteilhaften Ausführungsform kann zumindest einer der Stutzen zumindest eine Ausnehmung, insbesondere einen Axialschlitz mit im Wesentlichen parallelen Seiten aufweisen. Andere Ausnehmungen können z.B.

V-förmig ausgestaltet sein. Eine derartige Ausnehmung führt zu einer Materialschwächung bezüglich radialer Kräfte. In der Folge kann der jeweilige Stutzen im Bereich der Ausnehmung einfacher radial elastisch verformt werden, wodurch insbesondere der Steckvorgang bzw. die Verrastung zwischen den Rastkonturen vereinfacht ist. Zweckmäßig ist dabei der jeweilige Axialschlitz bzw. die Ausnehmung so positioniert, dass er/sie an der axialen Stirnseite des jeweiligen Stutzens beginnt und sich dann in der Axialrichtung erstreckt. Außerdem ist zwischen Wandabschnitten, die den jeweiligen Axialabschnitt der Umfangsrichtung begrenzen, eine Lücke vorhanden, wodurch die radiale elastische Nachgiebigkeit der mit der Hilfe der Ausnehmungen bzw. Axialschlitze voneinander separierten Umfangssegmente des Stutzens verbessert ist. Vorzugsweise sind je Stutzen zumindest zwei, bevorzugt vier, derartige Ausnehmungen bzw. Axialschlitze vorgesehen, die bevorzugt in Umfangsrichtung gleichmäßig verteilt angeordnet sind.

Entsprechend einer speziellen Ausführungsform kann jeder Stutzen an seiner Außenseite eine Radialdichtung aufweisen, die im eingesteckten Zustand an der Innenseite der Hülse dichtend anliegt. In diesem Fall ist jeder Stutzen separat gegenüber der Hülse abgedichtet. Bei einer derartigen Ausführungsform können die beiden Stutzen im eingesteckten Zustand innerhalb der Hülse stirnseitig aneinanderstoßen. Hierdurch baut die Kupplungseinrichtung besonders kompakt und formstabil. Außerdem besitzt diese Ausführungsform einen sehr geringen Durchströmungswiderstand, da die beiden Stutzen mit gleichen Innenquerschnitten versehen werden können, wodurch eine Durchströmung und Kupplungseinrichtung ohne Querschnittssprünge möglich ist.

Alternativ ist auch eine Ausführungsform möglich, bei welcher im eingesteckten Zustand der Stutzen der eine Stutzen innerhalb der Hülse in den anderen Stutzen eingesteckt ist. Hierdurch vereinfacht sich die Abdichtung der miteinander zu verbindenden Fluidleitungen, da nur noch die beiden Stutzen relativ zueinander abgedichtet werden müssen. Eine Abdichtung zwischen Stutzen und Hülse ist dann nicht mehr erforderlich. Beispielsweise kann der in den anderen Stutzen eingesteckte Stutzen an seiner Außenseite eine Radialdichtung aufweisen, die im eingesteckten Zustand an der Innenseite des anderen Stutzens dichtend anliegt.

Die jeweilige Außenrastkontur kann am jeweiligen Stutzen in Umfangsrichtung vollständig umlaufen. Hierdurch vereinfacht sich eine sichere Verrastung mit der Hülse. Sofern geschlitzte Stutzen vorgesehen sind, können die Axialschlitze zweckmäßig in Axialrichtung so groß dimensioniert sein, dass sie die jeweilige Außenrastkontur in der Umfangsrichtung unterbrechen. Hierdurch wird erreicht, dass die mit Hilfe der Axialschlitze gebildeten Umfangssegmente des jeweiligen Stutzens die Außenrastkontur bzw. die Außenrastkontursegmente tragen, so dass die Außenrastkontursegmente beim Steckvorgang federelastisch nach innen ausweichen können.

Gemäß einer vorteilhaften Ausgestaltung der Erfindung verfügen die Außenrastkonturen über einen, sich entgegen der Montagerichtung kontinuierlich vergrößernden Querschnitt. Diese kontinuierliche Vergrößerung kann linear, also mit einer gleichbleibenden Steigung oder mit unterschiedlichen Steigungen realisiert werden. Vorzugsweise schließt die Vergrößerung einen spitzen Winkel, insbesondere einen Winkel kleiner 75°, vorzugsweise von 30° - 45° ein. Bei unterschiedlichen Steigungen ist es vorteilhaft, mit einer geringen Steigung zu beginnen und diese dann zu vergrößern. Somit ist eine gute Montierbarkeit sichergestellt. An die kontinuierliche Querschnittsvergrößerung schließt eine sprunghafte Querschnittsverkleinerung an, welche eine radial, also im 90°-Winkel zu der Montagerichtung verlaufende Wand bildet. Bei anderen Ausführungen kann diese Wand auch einen größeren, insbesondere bis 100° oder kleineren Winkel, insbesondere größer 45°, einschließen. Diese Querschnittsverkleinerung kann bei einer vorteilhaften Ausführung dem Außenumfang des Stutzens entsprechen. Bei anderen Ausführungen kann diese Querschnittsverkleinerung jedoch auch größer oder kleiner als der Außenumfang ausgeführt sein. Hierbei ist dann ein Absatz oder eine Nut vorgesehen. Die mit dieser Außenrastkontur der/des Stutzens korrespondierende Innenrastkontur der Hülse kann z.B. als integrale Ringwand mit parallelen Seiten oder als eine Innennut ausgeführt werden.

Bei einer weiteren vorteilhaften Ausgestaltung der Erfindung sind die Innenrastkonturen der Hülse mit einem, sich in Montagerichtung verkleinernden Querschnitt ausgeführt. Dieser sich verjüngende Querschnitt kann linear, mit gleichbleibender Steigung oder mit unterschiedlichen Steigungen realisiert werden. Im Anschluss an die Steigung schließt ein Querschnittssprung an, der als radial verlaufende Wand ausgeführt ist. Diese Innenrastkontur kann analog zu den obigen Ausführungen zu der Außenrastkontur ausgeführt sein und mit einer Außenrastkontur, welche z.B. als umlaufender Absatz oder als ein, in einer Nut angeordneter Sicherungsring ausgeführt ist, korrespondieren.

Gemäß einer besonders vorteilhaften Ausführung korrespondieren die sich vergrößernden Querschnitte der Außenrastkonturen der Stutzen mit den sich verjüngenden Innenrastkonturen der Hülse. Mit anderen Worten, die konischen Rastkonturen besitzen betragsmäßig die gleichen Konizitäten, also Konuswinkel. Somit gleiten bei der Montage die Schrägen beider Rastkonturen flächig aufeinander. Nach dem Überschreiten der Querschnittssprünge liegen diese dann mit ihren radial verlaufenden Bereichen axial aneinander an und bilden so eine nicht lösbare Verrastung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: eine teilweise geschnittene, isometrische Ansicht einer Kupplungseinrichtung,
- Fig. 2: eine isometrische Ansicht von zwei Stutzen der Kupplungseinrichtung,
- Fig. 3: eine isometrische Ansicht einer Hülse der Kupplungseinrichtung,
- Fig. 4: eine Seitenansicht der beiden Stutzen, jedoch bei einer anderen Ausführungsform der Kupplungseinrichtung,
- Fig. 5: eine teilweise geschnittene Seitenansicht der Kupplungseinrichtung bei einer weiteren Ausführungsform,
- Fig. 6: eine teilweise geschnittene Seitenansicht der Kupplungseinrichtung bei einer anderen Ausführungsform
- Fig. 7: einen Längsschnitt der Kupplungseinrichtung im Bereich von Rastkonturen,
- Fig. 8: einen Längsschnitt der Hülse mit einer Schutzhülle,
- Fig. 9: eine perspektivische Ansicht der Hülse mit Schutzhülle.

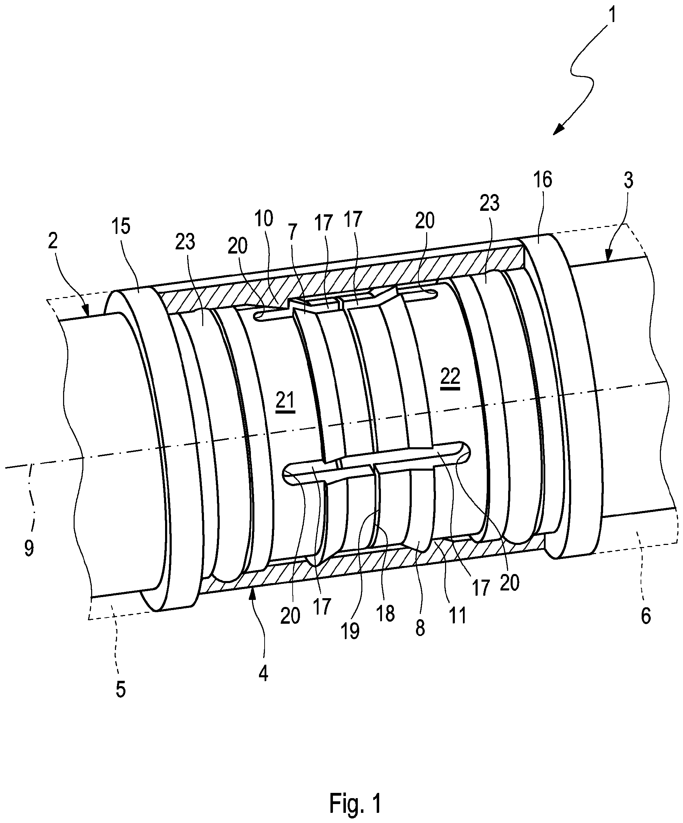

Entsprechend den Fig. 1 bis 6 umfasst eine Kupplungseinrichtung 1 einen ersten Stutzen 2, einen zweiten Stutzen 3 und eine Hülse 4. Die Kupplungseinrichtung 1 dient zum Verbinden einer mit unterbrochener Linie angedeuteten ersten Fluidleitung 5 mit einer ebenfalls mit unterbrochener Linie angedeuteten zweiten Fluidleitung 6. Die Fluidleitungen 5, 6 können dabei Bestandteile einer im Übrigen nicht dargestellten Kurbelgehäuseentlüftungseinrichtung einer Brennkraftmaschine bzw. einer Frischluftanlage einer Brennkraftmaschine sein. Beispielsweise kann eine der beiden Fluidleitungen 5, 6 eine Blow-by-Gas-Leitung der Kurbelgehäuseentlüftungseinrichtung sein, die ein Kurbelgehäuse der Brennkraftmaschine mit einer Frischluftanlage der Brennkraftmaschine verbindet. Die andere Fluidleitung 5, 6 kann dann am Kurbelgehäuse oder an der Frischluftanlage oder an einem Ölabscheider der Kurbelgehäuseentlüftungseinrichtung ausgebildet sein. Bei einer Frischluftanlage kann die eine Fluidleitung durch eine Luftleitung gebildet sein, während die andere Fluidleitung 5, 6 beispielsweise an einem Filter der Frischluftanlage oder an einer Ladeeinrichtung, insbesondere Verdichter, der Frischluftanlage oder an einem Verteiler der Frischluftanlage ausgebildet sein kann.

Der erste Stutzen 2 weist an seiner Außenseite eine Außenrastkontur 7 auf und ist mit der ersten Fluidleitung 5 verbunden oder so ausgestaltet, dass er mit der ersten Fluidleitung 5 verbindbar ist. Sofern die erste Fluidleitung 5 ein Gehäuse ist, kann der erste Stutzen 2 integral an diesem Gehäuse ausgeformt sein. Sofern die erste Fluidleitung 5 ein Schlauch ist, kann dieser auf den ersten Stutzen 2 aufgeschossen werden.

Der zweite Stutzen 3 weist an seiner Außenseite ebenfalls eine Außenrastkontur 8 auf und ist mit der zweiten Fluidleitung 6 verbunden oder so ausgestaltet, dass er mit der zweiten Fluidleitung 6 verbindbar ist. Sofern es sich bei der zweiten Fluidleitung 6 um ein Gehäuse oder dergleichen handelt, kann der zweite Stutzen 3 integral an diesem Gehäuse ausgeformt sein. Handelt es sich bei der zweiten Fluidleitung 6 jedoch um einen Schlauch, kann dieser auf den zweiten Stutzen 3 aufgeschossen sein. Bei den Ausführungsformen der Fig. 1 bis 5 sind die beiden Stutzen 2, 3 identisch ausgestaltet, so dass es sich dabei um Gleichteile handelt. Die Außenrastkonturen 7, 8 weisen entgegen der Montagerichtung eine kontinuierliche Querschnittsvergrößerung, also einen Konus, auf. Diese ist im Profil als Rampe ausgeführt. In Montagerichtung verfügen die Außenrastkonturen 7, 8 über einen Querschnittssprung, der als Stufe ausgeführt ist.

Die Hülse 4 ist so dimensioniert, dass die beiden Stutzen 2, 3 darin bezüglich einer Längsmittelachse 9 der zylindrischen Hülse 4 axial einsteckbar sind, und zwar an gegenüberliegenden Enden der Hülse 4. Die Längsmittelachse 9 der Hülse 4 definiert gleichzeitig die Steckrichtung und die Längsachse der Kupplungseinrichtung 1. Die Hülse 4 weist an ihrer Innenseite zwei Rastkonturen 10 und 11 auf, die komplementär zu den Außenrastkonturen 7, 8 der Stutzen 2, 3 ausgestaltet sind. Die Rastkonturen 7, 8, 10, 11 sind so aufeinander abgestimmt, dass sie beim Einstecken des Stutzen 2, 3 in die Hülse 4 miteinander verrasten und die so hergestellte Verbindung zwischen den Fluidleitungen 5, 6 sichern. Die Hülse 4 bzw. die jeweilige Innenrastkontur 10, 11 verfügt ebenfalls über eine kontinuierliche Querschnittsveränderung, also z.B. einen Konus oder ein Rampenprofil, entgegen der Montagerichtung und über einen daran anschließenden Querschnittssprung zurück in den Ausgangsdurchmesser, der im Profil nach Art einer Rampe gestaltet ist. Bei der Montage gleiten die Schrägen oder Rampen der Rastkonturen 7, 8, 10, 11, insbesondere bei gleichen Konizitäten flächig, aufeinander, bis sie den Querschnittssprung überschritten haben. Dann liegen die im Wesentlichen radial verlaufenden Wände, die sich am Ende der jeweiligen Stufe befinden, axial aneinander an und bilden so eine, vorzugsweise unlösbare, Rastverbindung.

Die Innenrastkonturen 10, 11 sind integral an der Hülse 4 ausgeformt. Zweckmäßig können auch die Außenrastkonturen 7, 8 am jeweiligen Stutzen 2, 3 integral ausgeformt sein.

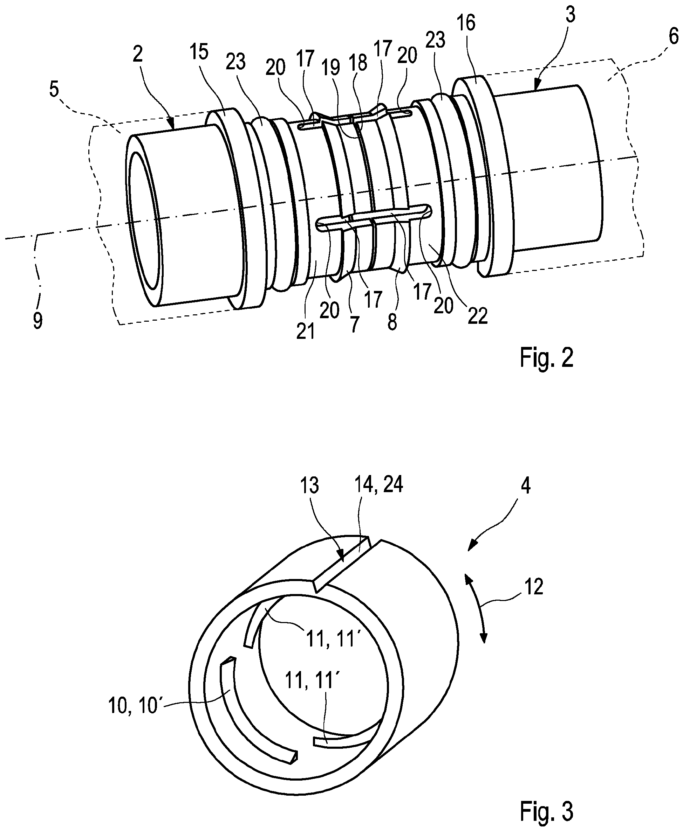

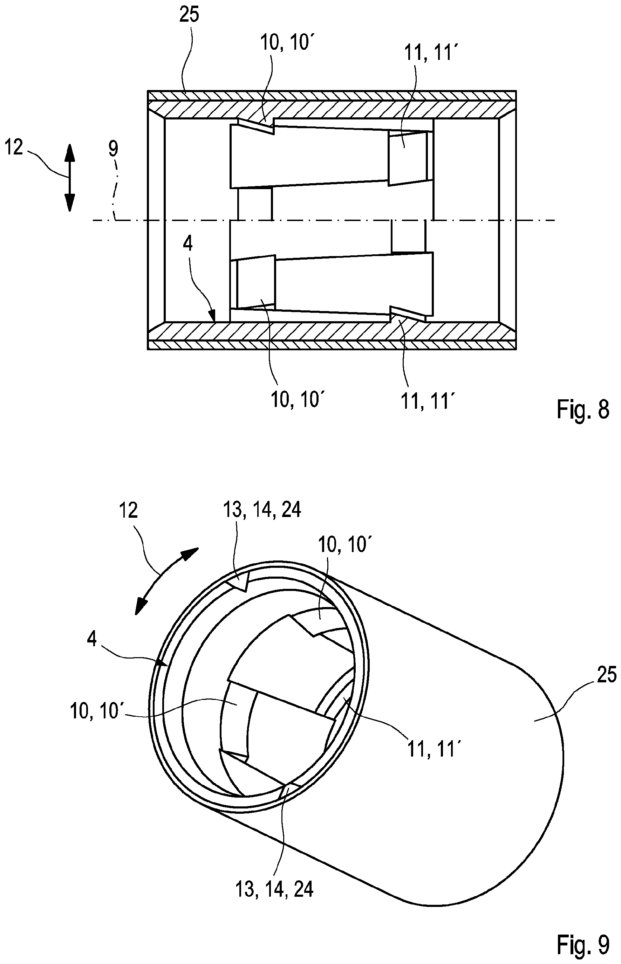

Wie sich beispielsweise den Fig. 3 und 8 entnehmen lässt, können die Innenrastkonturen 10, 11 so ausgestaltet sein, dass sie in einer in den Fig. 3 und 8 durch einen Doppelpfeil angedeuteten Umfangsrichtung 12 der Hülse 4 nicht vollständig umlaufen, sondern durch wenigstens zwei in der Umfangsrichtung 12 verteilt angeordnete Rastkontursegmente 10' bzw. 11' gebildet sind. In den hier gezeigten Beispielen weist die jeweilige Innenrastkontur 10, 11 jeweils genau zwei (Fig. 3) bzw. genau vier (Fig. 8) solche Rastkontursegmente 10' bzw. 11' auf. Dabei sind innerhalb der jeweiligen Innenrastkontur 10, 11 die zugehörigen Rastkontursegmente 10', 11' zueinander diametral gegenüberliegend positioniert. Ferner sind die Rastkontursegmente 10' der einen Innenrastkontur 10 gegenüber den Rastkontursegmenten 11' der anderen Innenrastkontur 11 in der Umfangsrichtung 12 versetzt angeordnet. Dieser Versatz in Umfangsrichtung liegt bei der in Fig. 3 gezeigten Ausführungsform bei etwa 90° und bei der in Fig. 8 gezeigten Ausführungsform bei etwa 45°.Erfindungsgemäß wird die Kupplungseinrichtung 1 so konzipiert, dass die damit hergestellte Verbindung, d.h. die zwischen den Stutzen 2, 3 und der Hülse 4 hergestellte Verrastung, unlösbar ausgestaltet ist, also nur durch Zerstörung der

Hülse 4 und/oder wenigstens eines Stutzens 2, 3 gelöst werden kann. Insbesondere sind somit keine Lösemittel vorgesehen. Ferner ist auch nicht vorgesehen, dass die Hülse 4 und/oder die Stutzen 2, 3 soweit elastisch verformbar sind, dass durch elastische Deformation die Verrastung gelöst werden könnte.

Falls dennoch die mit Hilfe der Kupplungseinrichtung 1 hergestellte Verbindung getrennt werden muss, ist die Hülse 4 gemäß den Fig. 3, 5, 6 und 9 mit wenigstens einer Sollbruchstelle 13 ausgestattet. Diese Sollbruchstelle 13 ist dabei so konzipiert, dass sie zum Lösen der Verbindung bzw. der Verrastung eine gezielte Zerstörung der Hülse 4 ermöglicht. Durch gezielte Zerstörung der Hülse 4 kann insbesondere eine Beschädigung der Stutzen 2, 3 und gegebenenfalls der damit verbundenen Fluidleitungen 5, 6 vermieden werden. Durch Ersetzen der zerstörten Hülse 4 kann die Kupplungseinrichtung 1 gegebenenfalls wieder erneuert werden, so dass sie erneut eine Verbindung zwischen den Fluidleitungen 5, 6 bzw. eine Verrastung der beiden Stutzen 2, 3 durch Einstecken in die neue Hülse 4 ermöglicht.

Zweckmäßig kann diese Sollbruchstelle 13 durch eine Axialnut 14 realisiert werden, die an der Außenseite der Hülse 4 ausgebildet ist. Zweckmäßig erstreckt sich die Axialnut 14 über die gesamte axiale Länge der Hülse 4. Im Beispiel der Fig. 3 ist die Axialnut 14 im Profil keilförmig oder V-förmig gestaltet, was eine besonders einfache Trennung ermöglicht.

Zur Betätigung der jeweiligen Sollbruchstelle 13 weist die Hülse 4 zweckmäßig an ihrer Außenseite eine Betätigungsstelle 24 auf, die eine Betätigung der Sollbruchstelle 13, ermöglicht, die zur gewünschten Zerstörung der Hülse 4 führt. Beispielsweise ermöglicht die Betätigungsstelle 24 einen Werkzeugeingriff zum Zerstören der Hülse 4. Folglich kann die Betätigungsstelle 24 auch als Eingriffstelle bezeichnet werden. Im Fall einer außenliegenden Axialnut 14 bildet diese Axialnut 14 zweckmäßig selbst die Betätigungsstelle 24. Mit anderen Worten, die Axialnut 14 bildet gleichzeitig die Sollbruchstelle 13 und die Betätigungsstelle 24. Alternativ ist es grundsätzlich ebenso möglich, die Sollbruchstelle 13 mittels einer innenliegenden Axialnut oder mit einer nicht sichtbaren Materialschwächung oder Klebung oder dergleichen zu realisieren. Die Betätigungsstelle 24 bleibt dann jedoch zweckmäßig an der Außenseite der Hülse 4 angeordnet, beispielsweise in Form einer langlochförmigen Vertiefung oder Durchgangsöffnung.

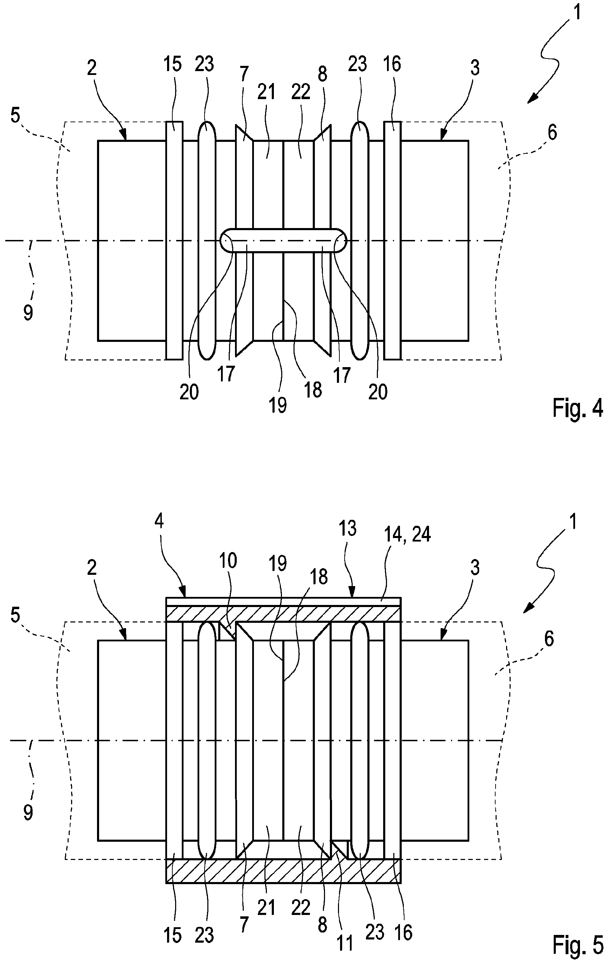

Bei den in den Fig. 1 und 2 sowie 4 und 5 gezeigten Ausführungsformen sind die beiden Stutzen 2, 3 an ihrer Außenseite jeweils mit einem Bund 15, 16 ausgestattet, der nach außen absteht und in der Umfangsrichtung 12 ringförmig umlaufend ausgestaltet ist. In der Ausführung der Fig. 1 und 2 sind die beiden Bünde 15, 16 auf die Hülse 4 so abgestimmt, dass sie im verrasteten Zustand einen Axialanschlag für die Hülse 4 bilden. Im Unterschied dazu sind die beiden Bünde 15, 16 bei den Ausführungsformen der Fig. 4 und 5 so auf die Hülse 4 abgestimmt, dass sie im verrasteten Zustand eine Radialabstützung für die Hülse 4 bilden.

Bei den Ausführungsformen der Fig. 1, 2 und 4 sind die beiden Stutzen 2, 3 axial geschlitzt, so dass jeder Stutzen 2, 3 zumindest einen Axialschlitz 17 aufweist. Bevorzugt sind mehrere Axialschlitze 17 je Stutzen 2, 3 vorgesehen. Der jeweilige Axialschlitz 17 beginnt zweckmäßig jeweils an einem stirnseitigen Ende 18 bzw. 19 des jeweiligen Stutzens 2, 3. Er erstreckt sich axial, also parallel zur Längsmittelachse 9 der Hülse 4. Er endet bevorzugt in einem abgerundeten Schlitzgrund 20, um Spannungsspitzen zu reduzieren.

Anstelle von Axialschlitzen 17 sind grundsätzlich auch beliebige andere Ausnehmungen realisierbar, um die radiale Federelastizität der Umfangsabschnitte des jeweiligen Stutzens 2, 3 zu verbessern. Derartige Ausnehmungen können parallele Seiten aufweisen oder V-förmig gestaltet sein.

Sofern mehrere Axialschlitze 17 je Stutzen 2, 3 vorhanden sind, sind diese zweckmäßig in Umfangsrichtung 12 gleichmäßig verteilt. Beispielsweise können vier Axialschlitze 17 je Stutzen 2, 3 vorgesehen sein, die jeweils um etwa 90° zueinander versetzt angeordnet sind. Die Axialschlitze 17 unterteilen den jeweiligen Stutzen 2 in einem die jeweilige Außenrastkontur 7 bzw. 8 aufweisenden Endabschnitt in mehrere Stutzensegmente 21, 22, die in radialer Richtung eine gewisse Federelastizität besitzen. Hierdurch kann der Rastvorgang erheblich vereinfacht werden. Zweckmäßig erstrecken sich die Axialschlitze 17 dann durch die jeweilige Außenrastkontur 7, 8, wodurch diese in der Umfangsrichtung 12, durch den jeweiligen Schlitz 17 unterbrochen ist.

Bei den Ausführungsformen der Fig. 1 bis 5 weist jeder Stutzen 2, 3 an seiner Außenseite jeweils zumindest eine Radialdichtung 23 auf, die in eingestecktem bzw. verrastetem Zustand an der Innenseite der Hülse 4 dichtend zur Anlage kommen. Zur Erzielung einer möglichst kompakten Bauform sowie zur Vermeidung von Relativbewegungen zwischen den Stutzen 2, 3 und der Hülse 4 im verrasteten Zustand können die Stutzen 2, 3 und die Hülse bzw. die Rastkontur 7, 8, 10, 11 so aufeinander abgestimmt sein, dass die beiden Stutzen 2, 3 stirnseitig aneinanderstoßen, wenn sie mit der Hülse 4 verrastet sind.

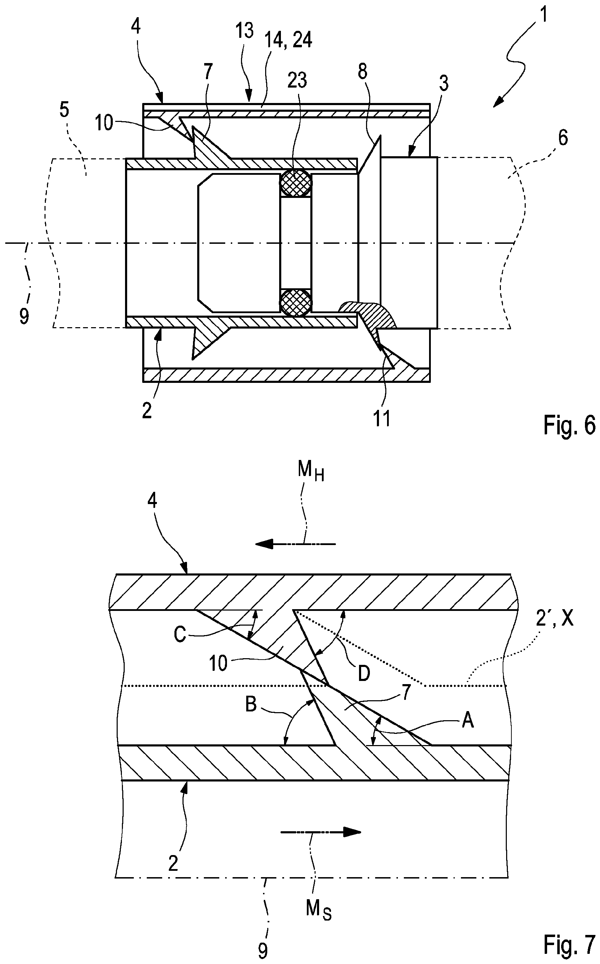

Fig. 6 zeigt nun eine andere Ausführungsform, bei der im verrasteten Zustand der eine Stutzen, hier der zweite Stutzen 3 innerhalb der Hülse 4 in den anderen Stutzen, also hier in den ersten Stutzen 2 eingesteckt ist. Bemerkenswert ist, dass auch bei dieser Ausführungsform beide Stutzen 2, 3 jeweils mit der Hülse 4 direkt verrastet sind. Diese Ausführungsform zeichnet sich dadurch aus, dass nur noch eine Radialdichtung 23 erforderlich ist, um die gewünschte Abdichtung innerhalb der Kupplungseinrichtung 1 realisieren zu können. Hierzu ist an der Außenseite des in den anderen Stutzen 2 eingesteckten Stutzens 3 besagte Radialdichtung 23 angeordnet, die im eingesteckten Zustand dann an einer Innenseite des anderen Stutzens 2 dichtend anliegt. Eine zusätzliche Dichtung zwischen den Stutzen 2, 3 und der Hülse 4 ist hier nicht erforderlich.

In Fig. 7 ist ein Ausschnitt der Rastkonturen 7, 8, 10, 11 dargestellt. Der erste Stutzen 2 wird in Montagerichtung M_{S} (strich-zwei-punktierter Pfeil) in die Hülse 4 eingeschoben. Zusätzlich kann die Hülse 4 ebenfalls in Montagerichtung M_{H} (strich-zwei-punktierter Pfeil) auf den Stutzen 2 aufgeschoben werden. Die Außenrastkontur 7 des ersten Stutzens 2 verfügt über eine Querschnittsvergrößerung, die entgegen der Montagerichtung Ms mit einem spitzen Winkel A linear ansteigt. Der Winkel A liegt zwischen 20° und 75°, vorzugsweise etwa 30° bis 45°. Im Anschluss an die Querschnittsvergrößerung verjüngt sich der Querschnitt sprungartig, wobei zwischen dem Stutzenaußendurchmesser und der Querschnittsvergrößerung ein Winkel B gebildet ist. Dieser Winkel B liegt zwischen 45° und 100°, vorzugsweise zwischen 75° bis 90°. Die Innenrastkontur 10 der Hülse 4 verfügt ebenfalls über eine linear verlaufende Querschnittsveränderung. Diese sind durch die Winkel C und D definiert. Der Winkel C ist analog Winkel A und der Winkel D ist analog Winkel B ausgestaltet. Die Winkel A und C sind vorzugsweise gleich groß, während die Winkel B und D verschieden sein können oder ebenfalls gleich sind. Die punktierte Linie X zeigt den ersten Stutzen 2' in montierter Lage, also nach der Verrastung.

Entsprechend den Fig. 8 und 9 ist bei der erfindungsgemäßen Kupplungseinrichtung 1 außerdem eine Schutzhülle 25 vorgesehen, welche die Hülse 4 umhüllt. Die Schutzhülle 25 umschließt die Hülse 4 in der Umfangsrichtung 12, vorzugsweise vollständig. Die Schutzhülle 25 schützt die Hülse 4 einerseits vor Verschmutzung und vor Beschädigung. Andererseits kann die Schutzhülle 25 insbesondere so ausgestaltet sein, dass sie die gegebenenfalls an der Außenseite der Hülse 4 vorgesehene Betätigungsstelle 24 kaschiert. Beispielsweise ist die Schutzhülle 25 hierzu opak gestaltet, so dass die Betätigungsstelle 24 durch die Schutzhülle 25 hindurch nicht sichtbar ist.

Sofern die Betätigungsstelle 24 wie in den gezeigten Beispielen mit der Sollbruchstelle 13, insbesondere mit der Axialnut 14 zusammenfällt, verdeckt die Schutzhülle 25 die Sollbruchstelle 13 bzw. die Axialnut 14.

Die Schutzhülle 25 kann beispielsweise als zusätzlich zur Hülse 4 vorhandenes, zusätzliches Bauteil realisiert sein, das auf geeignete Weise an der Hülse 4 angebracht ist. Beispielsweise kann die Schutzhülle 25 auf die Hülse 4 aufgeschrumpft oder einfach aufgesteckt oder aufgewickelt sein. Optional kann die Schutzhülle 25 an der Hülse 4 befestigt sein, beispielsweise durch Verkleben, durch Vulkanisieren oder durch Plastifizieren. Bei der Schutzhülle 25 kann es sich beispielsweise um eine Kunststofffolie, um eine Metallfolie, um ein Rohr mit geringer Wandstärke oder um einen Schlauch oder um eine Wickelband oder dergleichen handeln.

Alternativ kann die Schutzhülle 25 auch in Form einer Beschichtung an der Hülse 4 angebracht sein. Eine derartige Beschichtung kann beispielsweise aufgesprüht, aufgestrichen, aufgespritzt oder aufgeschäumt sein.

Um die mit Hilfe der Kupplungseinrichtung 1 hergestellte Verrastung zwischen den Stutzen 2, 3 und der Hülse 4 durch Zerstören der Hülse 4 lösen zu können, kann die Schutzhülle 25 zumindest teilweise von der Hülse 4 entfernt werden. Sofern die Schutzhülle 25 durch eine Beschichtung gebildet ist, kann die Schutzhülle 25 zumindest bereichsweise, nämlich im Bereich der jeweiligen Sollbruchstelle 13 bzw. im Bereich der jeweiligen Betätigungsstelle 24 von der Hülse 4, z.B. abgekratzt werden. Handelt es sich jedoch bei der Schutzhülle 25 um ein separates Bauteil, kann die Schutzhülle 25 aufgeschnitten oder abgeschoben werden. Alternativ ist es sowohl für die Beschichtungslösung als auch für die Bauteillösung der Schutzhülle 25 möglich, die Schutzhülle 25 zumindest im Bereich der Betätigungsstelle 24 bzw. im Bereich der Sollbruchstelle 13 zu komprimieren, um die Sollbruchstelle 13 zu betätigen. In diesem Fall ist der Werkstoff der Schutzhülle 25 entsprechend nachgiebig gewählt.

Als zusätzliche Funktion kann die Schutzhülle 25 auch mit einer speziellen Farbgebung versehen sein, beispielsweise durch die Wahl von Signalfarben, wie z.B. rot, gelb, orange.

Zum Kaschieren der Betätigungsstelle 24 bzw. der Sollbruchstelle 13 erstreckt sich die Schutzhülle 25 in der Axialrichtung zweckmäßig über die gesamte Länge der Hülse 4. Insbesondere für den Fall, dass beide Stutzen 2, 3 in die Hülse 4 eingesteckt sind, ist dann von außen nicht mehr erkennbar, dass es sich bei der Hülse 4 und der Schutzhülle 25 um zwei separate Bauteile handelt und insbesondere dass die Schutzhülle 25 eine an der Hülse 4 angebrachte Betätigungsstelle 24 bzw. Sollbruchstelle 13 verdeckt.

## Patentansprüche

1. Kupplungseinrichtung zum Verbinden einer ersten Fluidleitung (5) mit einer zweiten Fluidleitung (6),
- mit einem ersten Stutzen (2), der an seiner Außenseite eine Außenrastkontur (7) aufweist und der mit der ersten Fluidleitung (5) verbunden ist oder damit verbindbar ist,
- mit einem zweiten Stutzen (3), der an seiner Außenseite eine Außenrastkontur (8) aufweist und der mit der zweiten Fluidleitung (6) verbunden ist oder damit verbindbar ist,
- mit einer Hülse (4), in welche beide Stutzen (2, 3) an gegenüberliegenden Enden einsteckbar sind und die an ihrer Innenseite zu den Außenrastkonturen (7, 8) komplementäre Innenrastkonturen (10, 11) aufweist, die beim Einstecken der Stutzen (2, 3) mit den Außenrastkonturen (7, 8) verrasten,
- wobei die Hülse (4) von einer Schutzhülle (25) umhüllt ist,
**dadurch gekennzeichnet,**
- **dass** die Verrastung zwischen den Stutzen (2, 3) und der Hülse (4) so gestaltet ist, dass sie nicht ohne Zerstörung der Hülse (4) und/oder wenigstens eines Stutzen (2, 3) lösbar ist,
- **dass** die Hülse (4) zumindest eine Sollbruchstelle (13) aufweist, die zum Lösen der Verrastung zwischen den Stutzen (2, 3) und der Hülse (4) eine gezielte Zerstörung der Hülse (4) ermöglicht.

2. Kupplungseinrichtung nach Anspruch 1,
**dadurch gekennzeichnet,**
**dass** die Sollbruchstelle (13) zumindest eine an der Außenseite der Hülse (4) ausgebildete Axialnut (14) aufweist oder durch diese gebildet ist.

3. Kupplungseinrichtung nach einem der Ansprüche 1 und 2
**dadurch gekennzeichnet,**
**dass** die Schutzhülle (25) eine an der Außenseite der Hülse (4) angeordnete Betätigungsstelle (24) der Sollbruchstelle (13) kaschiert, wobei die Sollbruchstelle (13) bei ihrer Betätigung eine gezielte Zerstörung der Hülse (4) zum Lösen der Verrastung zwischen den Stutzen (2, 3) und der Hülse (4) ermöglicht.

4. Kupplungseinrichtung nach einem der Ansprüche 1 bis 3,
**dadurch gekennzeichnet,**
- **dass** die Schutzhülle (25) als Beschichtung ausgestaltet ist, die auf die Hülse (4) aufgebracht ist, oder
- **dass** die Schutzhülle (25) ein auf die Hülse (4) aufgebrachtes zusätzliches Bauteil ist.

5. Kupplungseinrichtung nach einem der Ansprüche 1 bis 4,
**dadurch gekennzeichnet,**
- **dass** die Innenrastkonturen (10, 11) integral an der Hülse (4) ausgeformt sind, und/oder
- **dass** die Außenrastkonturen (7, 8) integral an den Stutzen (2, 3) ausgeformt sind.

6. Kupplungseinrichtung nach einem der Ansprüche 1 bis 5,
**dadurch gekennzeichnet,**
- **dass** die Innenrastkonturen (10, 11) jeweils durch mindestens zwei in Umfangsrichtung (12) verteilt angeordnete Rastkontursegmente (10', 11'), gebildet sind.

7. Kupplungseinrichtung nach Anspruch 6,
**dadurch gekennzeichnet,**
**dass** die Rastkontursegmente (10', 11') der einen Innenrastkontur (10, 11) gegenüber den Rastkontursegmenten (10', 11') der anderen Innenrastkontur (10, 11) in Umfangsrichtung (12) versetzt angeordnet sind.

8. Kupplungseinrichtung nach Anspruch 6 oder 7,
**dadurch gekennzeichnet,**
**dass** die jeweilige Innenrastkontur (10, 11) genau zwei Rastkontursegmente (10', 11') aufweist, die gegenüber den beiden Rastkontursegmenten (10', 11') der jeweils anderen Innenrastkontur (10, 11) in Umfangsrichtung (12) um 90° versetzt angeordnet sind.

9. Kupplungseinrichtung nach einem der Ansprüche 1 bis 8,
**dadurch gekennzeichnet,**
- **dass** zumindest einer der Stutzen (2, 3) an seiner Außenseite einen ringförmig umlaufenden, abstehenden Bund aufweist, der als Axialanschlag oder als Radialabstützung für die Hülse (4) dient, und/oder
- **dass** zumindest einer der Stutzen (2, 3) zumindest eine Ausnehmung, z.B. einen Axialschlitz (17), aufweist, wobei vorzugsweise mehrere Ausnehmungen oder Axialschlitze (17) in Umfangsrichtung (12) verteilt angeordnet sein können, wobei insbesondere vorgesehen sein kann, dass am jeweiligen Stutzen (2, 3) die Außenrastkontur (7, 8) in der Umfangsrichtung (12) umläuft und durch die jeweilige Ausnehmung oder durch den jeweiligen Axialschlitz (17) unterbrochen ist.

10. Kupplungseinrichtung nach einem der Ansprüche 1 bis 9,
**dadurch gekennzeichnet,**
- **dass** jeder Stutzen (2, 3) an seiner Außenseite eine Radialdichtung (23) aufweist, die im eingesteckten Zustand an der Innenseite der Hülse (4) dichtend anliegt, und/oder
- **dass** die beiden Stutzen (2, 3) im eingesteckten Zustand innerhalb der Hülse (4) stirnseitig aneinanderstoßen.

11. Kupplungseinrichtung nach einem der Ansprüche 1 bis 9,
**dadurch gekennzeichnet,**
- **dass** im eingesteckten Zustand der Stutzen (2, 3) der eine Stutzen (3) innerhalb der Hülse (4) in den anderen Stutzen (2) eingesteckt ist,
- wobei insbesondere vorgesehen sein kann, dass der in den anderen Stutzen (2) eingesteckte Stutzen (3) an seiner Außenseite eine Radialdichtung (23) aufweist, die im eingesteckten Zustand an der Innenseite des anderen Stutzens (2) dichtend anliegt.

12. Kupplungseinrichtung nach einem der Ansprüche 1 bis 11,
**dadurch gekennzeichnet,**
**dass** die Rastkonturen (7, 8, 10, 11) im Profil rampenförmig ausgestaltet sind, wobei insbesondere gleiche Rampensteigungen vorgesehen sein können, so dass die Rampen beim Steckvorgang flächig aneinander abgleiten.

13. Kurbelgehäuseentlüftungseinrichtung für eine Brennkraftmaschine, insbesondere eines Kraftfahrzeugs,
- mit einer Blow-by-Gas-Leitung, die ein Kurbelgehäuse der Brennkraftmaschine mit einer Frischluftanlage der Brennkraftmaschine verbindet,
- mit mindestens einer Kupplungseinrichtung (1) nach einem der Ansprüche 1 bis 12 zum Verbinden der Blow-by-Gas-Leitung mit dem Kurbelgehäuse oder mit der Frischluftanlage oder mit einem gegebenenfalls in die Blow-by-Gas-Leitung eingebundenen Ölabscheider.

14. Frischluftanlage für eine Brennkraftmaschine, insbesondere eines Kraftfahrzeugs,
- mit einer Luftleitung,
- mit mindestens einer Kupplungseinrichtung (1) nach einem der Ansprüche 1 bis 12 zum Verbinden der Luftleitung mit einem Filter der Frischluftanlage oder mit einer Ladeeinrichtung der Frischluftanlage oder mit einem Verteiler der Frischluftanlage.

## Claims

1. A coupling device for connecting a first fluid line (5) to a second fluid line (6),
- with a first connecting piece (2) which has an outer latching contour (7) on its outside and is connected to the first fluid line (5) or can be connected thereto,
- with a second connecting piece (3) which has an outer latching contour (8) on its outside and is connected to the second fluid line (6) or can be connected thereto,
- with a sleeve (4) in which both connecting pieces (2, 3) can be inserted on opposite ends and which, on its inner side, has inner latching contours (10, 11) which are complementary to the outer latching contours (7, 8) and latch with the outer latching contours (7, 8) when the connecting pieces (2, 3) are inserted,
- wherein the sleeve (4) is enclosed by a protective cover (25),
**characterized in**
- **that** the latching between the connecting pieces (2, 3) and the sleeve (4) is configured in such a manner that it is not releasable without destroying the sleeve (4) and/or at least one connecting piece (2, 3),
- **that** the sleeve (4) has at least one predetermined braking point (13) which allows a systematic destruction of the sleeve (4) for releasing the latching between the connecting pieces (2, 3) and the sleeve (4).

2. The coupling device according to claim 1,
**characterized in**
**that** the predetermined breaking point (13) has at least one axial groove (14) on the outside of the sleeve (4) or is formed by said axial groove.

3. The coupling device according to claim 1 or 2,
**characterized in**
**that** the protective cover (25) covers an actuation point (24) of the predetermined breaking point (13), which actuation point is arranged on the outside of the sleeve (4), wherein when actuated, the predetermined breaking point (13) allows a systematic destruction of the sleeve (4) for releasing the latching between the connecting pieces (2, 3) and the sleeve (4).

4. The coupling device according to any one of the claims 1 to 3,
**characterized in**
- **that** the protective cover (25) is configured as coating which is applied onto the sleeve (4), or
- **that** the protective cover (25) is an additional component which is applied onto the sleeve (4).

5. The coupling device according to any one of the claims 1 to 4,
**characterized in**
- **that** the inner latching contours (10, 11) are integrally formed on the sleeve (4),
and/or
- **that** the outer latching contours (7, 8) are integrally formed on the connecting pieces (2, 3).

6. The coupling device according to any one of the claims 1 to 5,
**characterized in**
- **that** the inner latching contours (10, 11) are each formed by at least two latching contour elements (10', 11') arranged distributed in the circumferential direction (12).

7. The coupling device according to claim 6,
**characterized in**
**that** the latching contour segments (10', 11') of the one inner latching contour (10, 11) are arranged offset in the circumferential direction (12) with respect to the latching contour segments (10', 11') of the other inner latching contour (10, 11).

8. The coupling device according to claim 6 or 7,
**characterized in**
**that** the respective inner latching (10, 11) has exactly two latching contour segments (10', 11') which are arranged offset in the circumferential direction (12) by 90° with respect to the two latching contour segments (10', 11') of the respective other inner latching contour (10, 11).

9. The coupling device according to any one of the claims 1 to 8,
**characterized in**
- **that** at least one of the connecting pieces (2, 3) has an annularly and circumferentially extending collar which projects on its outside and serves as axial stop or as radial support for the sleeve (4), and/or
- **that** at least one of the connecting pieces (2, 3) has at least one recess, e.g. an axial slot (17), wherein preferably a plurality of recesses or axial slots (17) can be arranged distributed in the circumferential direction (12), wherein it can in particular be provided that the outer latching contour (7, 8) extends circumferentially on the respective connecting piece (2, 3) in the circumferential direction (12) and is interrupted by the respective recess or by the respective axial slot (17).

10. The coupling device according to any one of the claims 1 to 9,
**characterized in**
- **that** each connecting piece (2, 3) has a radial seal (23) which is arranged on its outside and, in the inserted state, rests sealingly against the inner side of the sleeve (4), and/or
- **that** in the inserted state, the two connecting pieces (2, 3) abut with their front sides against each other within the sleeve (4).

11. The coupling device according to any one of the claims 1 to 9,
**characterized in**
- **that** in the inserted state of the connecting pieces (2, 3), the one connecting piece (3) is inserted within the sleeve (4) into the other connecting piece (2),
- wherein it can in particular be provided that the connecting piece (3) inserted in the other connecting piece (2) has on its outside a radial seal (23) which, in the inserted state, rests sealingly against the inner side of the other connecting piece (2).

12. The coupling device according to any one of the claims 1 to 11,
**characterized in**
**that** the latching contours (7, 8, 10, 11) are configured with a ramp-shaped profile, wherein in particular identical ramp inclines can be provided so that during the insertion process, the ramps slide with their surfaces on each other.

13. A crankcase ventilation device for an internal combustion engine, in particular of a motor vehicle,
- with a blow-by gas line which connects a crankcase of the internal combustion engine to a fresh air system of the internal combustion engine,
- with at least one coupling device (1) according to any one of the claims 1 to 12 for connecting the blow-by gas line to the crankcase or to the fresh air system or to an oil separator optionally integrated in the blow-by gas line.

14. A fresh air system for an internal combustion engine, in particular of a motor vehicle,
- with an air line,
- with at least one coupling device (1) according to any one of the claims 1 to 12 for connecting the air line to a filter of the fresh air system or to a charging device of the fresh air system or to a distributor of the fresh air system.

## Revendications

1. Dispositif de couplage pour relier une première conduite de fluide (5) à une deuxième conduite de fluide (6),
- avec une première tubulure (2), qui présente sur son côté extérieur un contour d'encliquetage extérieur (7) et qui est reliée à la première conduite de fluide (5) ou peut être reliée à celle-ci,
- avec une deuxième tubulure (3), qui présente sur son côté extérieur un contour d'encliquetage extérieur (8) et qui est reliée à la deuxième conduite de fluide (6) ou peut être reliée à celle-ci,
- avec une douille (4), dans laquelle les deux tubulures (2, 3) peuvent être insérées aux extrémités opposées et qui présente des contours d'encliquetage intérieurs (10,11) complémentaires aux contours d'encliquetage extérieurs (7, 8) sur son côté intérieur, qui s'enclenchent lors de l'insertion des tubulures (2, 3) avec les contours d'encliquetage extérieurs (7, 8),
- dans lequel la douille (4) est enveloppée d'une enveloppe de protection (25),
**caractérisé en ce**
- **que** l'enclenchement entre les tubulures (2, 3) et la douille (4) est conçu de sorte qu'il ne puisse pas être libéré sans la destruction de la douille (4) et/ou d'au moins une tubulure (2, 3),
- **que** la douille (4) présente au moins un point de rupture théorique (13), qui permet une destruction ciblée de la douille (4) pour libérer l'enclenchement entre les tubulures (2, 3) et la douille (4).

2. Dispositif de couplage selon la revendication 1,
**caractérisé en ce**
**que** le point de rupture théorique (13) présente au moins une rainure axiale (14) réalisée sur le côté extérieur de la douille (4) ou est formé par celle-ci.

3. Dispositif de couplage selon l'une quelconque des revendications 1 et 2,
**caractérisé en ce**
**que** l'enveloppe de protection (25) dissimule une zone d'actionnement (24) agencée sur le côté extérieur de la douille (4) du point de rupture théorique (13), dans lequel le point de rupture théorique (13) permet lors de son actionnement une destruction ciblée de la douille (4) pour libérer l'enclenchement entre les tubulures (2, 3) et la douille (4).

4. Dispositif de couplage selon l'une quelconque des revendications 1 à 3,
**caractérisé en ce**
- **que** l'enveloppe de protection (25) est réalisée sous forme de revêtement, qui est appliquée sur la douille (4), ou
- **que** l'enveloppe de protection (25) est un composant supplémentaire appliqué sur la douille (4).

5. Dispositif de couplage selon l'une quelconque des revendications 1 à 4,
**caractérisé en ce**
- **que** les contours d'encliquetage intérieurs (10, 11) sont formés d'un seul tenant sur la douille (4) et/ou
- **que** les contours d'encliquetage extérieurs (7, 8) sont formés d'un seul tenant sur les tubulures (2, 3).

6. Dispositif de couplage selon l'une quelconque des revendications 1 à 5,
**caractérisé en ce**
- **que** les contours d'encliquetage intérieurs (10, 11) sont formés respectivement par au moins deux segments de contour d'encliquetage (10', 11') répartis dans le sens périphérique (12).

7. Dispositif de couplage selon la revendication 6,
**caractérisé en ce**
- **que** les segments de contour d'encliquetage (10', 11') de l'un contour d'encliquetage intérieur (10, 11) sont décalés dans le sens périphérique (12) par rapport aux segments de contour d'encliquetage (10', 11') de l'autre contour d'encliquetage intérieur (10, 11).

8. Dispositif de couplage selon la revendication 6 ou 7,
**caractérisé en ce**
**que** le contour d'encliquetage intérieur (10, 11) respectif présente exactement deux segments de contour d'encliquetage (10', 11'), qui sont décalés de 90° dans le sens périphérique (12) par rapport aux deux segments de contour d'encliquetage (10', 11') de respectivement l'autre contour d'encliquetage intérieur (10, 11).

9. Dispositif de couplage selon l'une quelconque des revendications 1 à 8,
**caractérisé en ce**
- **qu'**au moins une des tubulures (2, 3) présente sur son côté extérieur une collerette saillante, périphérique en forme d'anneau qui sert de butée axiale ou d'appui radial pour la douille (4) et/ou
- **qu'**au moins une des tubulures (2, 3) présente au moins un évidement, par exemple une fente axiale (17), dans lequel de préférence plusieurs évidements ou fentes axiales (17) peuvent être répartis dans le sens périphérique (12), dans lequel il peut être prévu en particulier que le contour d'encliquetage extérieur (7, 8) fait le tour de la tubulure (2, 3) respective dans le sens périphérique (12) et est interrompu par l'évidement respectif ou par la fente axiale (17) respective.

10. Dispositif de couplage selon l'une quelconque des revendications 1 à 9,
**caractérisé en ce**
- **que** chaque tubulure (2, 3) présente sur son côté extérieur un joint radial (23), qui s'applique de manière étanche à l'état inséré contre le côté intérieur de la douille (4), et/ou
- **que** les deux tubulures (2, 3) butent l'une contre l'autre côté frontal à l'état inséré à l'intérieur de la douille (4).

11. Dispositif de couplage selon l'une quelconque des revendications 1 à 9,
**caractérisé en ce**
- **qu'**à l'état inséré des tubulures (2, 3), l'une tubulure (3) est insérée à l'intérieur de la douille (4) dans l'autre tubulure (2),
- dans lequel il peut être prévu en particulier que la tubulure (3) insérée dans l'autre tubulure (2) présente sur son côté extérieur un joint radial (23), qui s'applique de manière étanche à l'état inséré contre le côté intérieur de dans l'autre tubulure (2).

12. Dispositif de couplage selon l'une quelconque des revendications 1 à 11,
**caractérisé en ce**
**que** les contours d'encliquetage (7, 8, 10, 11) sont réalisés avec un profil en forme de rampe, dans lequel en particulier des pentes de rampe identiques peuvent être prévues, de sorte que les rampes glissent à plat l'une sur l'autre lors de l'opération d'insertion.

13. Dispositif d'aération de carter de vilebrequin pour un moteur à combustion interne, en particulier d'un véhicule automobile,
- avec une conduite de fuite de gaz, qui relie un carter de vilebrequin du moteur à combustion interne à une installation d'air frais du moteur à combustion interne,
- avec au moins un dispositif de couplage (1) selon l'une quelconque des revendications 1 à 12 pour relier la conduite de fuite de gaz au carter de vilebrequin ou à l'installation d'air frais ou à un séparateur d'huile intégré le cas échéant dans la conduite de fuite de gaz.

14. Installation d'air frais pour un moteur à combustion interne, en particulier d'un véhicule automobile,
- avec une conduite d'air,
- avec au moins un dispositif de couplage (1) selon l'une quelconque des revendications 1 à 12 pour relier la conduite d'air à un filtre de l'installation d'air frais ou à un dispositif de charge de l'installation d'air frais ou à un distributeur de l'installation d'air frais.
